# FASCICULE DE BREVET EUROPEEN

(11) **EP 0 561 673 B1**
(45) Date de publication et mention de la délivrance du brevet: **24.04.1996**
(21) Numéro de dépôt: 93400631.3
(22) Date de dépôt: 11.03.1993
(51) Int. Cl.: B60H 1/00, F01P 11/02

(54) **Circuit de liquide pour échangeur de chaleur associé à un moteur de véhicule automobile**
Flüssigkeitskreislauf für die Wärmetauscher einer Kraftwagenbrennkraftmaschine
Coolant circuit for the heat exchanger associated with an automobile engine

(30) Priorité: 16.03.1992 FR 9203102
(43) Date de publication de la demande: 22.09.1993
(73) Titulaire: AUTOMOBILES PEUGEOT, F-75116 Paris (FR); AUTOMOBILES CITROEN, F-92200 Neuilly sur Seine (FR)
(72) Inventeur: Huon, Daniel, F-78570 Andresy (FR)
(74) Mandataire: Durand, Yves Armand Louis

(56) Documents cités:
- EP-A- 0 215 369
- FR-A- 2 086 767
- FR-A- 2 280 793
- GB-A- 473 483

## Description

La présente invention concerne un circuit de liquide pour un échangeur de chaleur associé à un moteur à combustion interne de véhicule automobile.

Dans l'art antérieur, on a déjà raccordé, à l'aide d'un circuit où circule un liquide tel que de l'eau, d'une part des parties à refroidir d'un moteur de véhicule automobile et d'autre part un échangeur de chaleur dit aérotherme. Ainsi, le liquide permettant le refroidissement du moteur sert également de source de chaleur pour la climatisation du véhicule. Généralement, de tels circuits de liquide comportent une première portion qui relie un orifice de sortie d'une boîte de remplissage du circuit (dite "boîte à eau") à l'entrée de l'aérotherme, par l'intermédiaire des parties à refroidir du moteur du véhicule et d'une pompe. Une seconde portion du circuit relie pour sa part la sortie de l'aérotherme à un second orifice formé comme l'orifice d'entrée, près du fond de la boîte à eau.

Cependant, il n'est pas possible avec les circuits connus de remplir l'aérotherme de façon simple, correcte et rapide, sans avoir à purger l'air que celui-ci contient. En outre, un dégazage permanent du liquide durant le fonctionnement du moteur, ainsi qu'un maintien du niveau de liquide dans l'aérotherme après arrêt de ce moteur, ne peuvent pas être obtenus avec de tels circuits.

Aussi, la présente invention a pour but de proposer un circuit de liquide simple et économique, qui pallie les inconvénients énoncés ci-dessus.

A cet effet, l'invention a pour objet un circuit de liquide pour un échangeur de chaleur associé à un moteur à combustion interne de véhicule automobile, du type comportant une première portion de circuit qui relie un orifice inférieur d'une boîte de remplissage du circuit à l'entrée de l'échangeur par l'intermédiaire d'une pompe ainsi que de parties à refroidir du moteur, et une seconde portion du circuit reliant la sortie de l'échangeur à un second orifice formé dans la boîte de remplissage, caractérisé en ce que le second orifice est situé à proximité du haut de la boîte de remplissage et est raccordé au premier orifice par un canal dit "interne" qui s'étend à l'intérieur de ladite boîte, un passage restreint étant prévu dans la partie basse du canal, entre une ouverture inférieure qui débouche du canal dans le bas de la boîte et un trou de dégazage du liquide provenant du second orifice.

Le circuit est également caractérisé en ce que, suivant un mode de réalisation, le passage restreint précité est constitué par un calibreur inséré dans le canal interne.

Suivant un autre mode de réalisation, ledit passage restreint est constitué par un étranglement venu de matière avec ledit canal interne.

Avantageusement, le canal interne comprend une partie à peu près cylindrique et d'axe sensiblement vertical, cette partie cylindrique présentant un déflecteur D en regard de l'orifice d'entrée du liquide dans le canal, et propre à faire tourbillonner le liquide pénétrant à l'intérieur de ladite partie cylindrique autour dudit axe vertical.

Dans ce cas, le trou de dégazage précité est de préférence formé à proximité de l'axe vertical de la partie cylindrique du canal, ainsi que de la paroi de sommet.

Suivant encore un autre mode de réalisation, une cloison tranversale de séparation, prévue dans le canal, comporte au moins une ouverture à proximité de sa périphérie et constitue le passage restreint précité.

Alors, la cloison transversale peut être solidaire de bossages et/ou de nervures, s'étendant à l'intérieur du canal et aptes à faciliter la circulation de liquide dans celui-ci.

On précisera encore ici que le canal précité est venu de moulage avec la boîte de remplissage.

L'invention se caractérisé aussi en ce que la boîte de remplissage est constituée par deux pièces moulées et assemblées suivant un plan de joint sensiblement horizontal et traversé par le canal interne précité.

Le circuit se caractérisé également en ce qu'une chicane en forme de casquette s'étend en saillie du canal interne au droit de l'ouverture inférieure et du passage restreint précité, en présentant un bord inférieur proche du fond de la boîte.

Selon encore une autre caractéristique, le premier orifice de la boîte, l'ouverture inférieure et la chicane précités sont situés de façon à être sensiblement à la hateur d'un niveau minimum de liquide à l'intérieur de la boîte de remplissage.

Mais d'autres avantages et particularités de l'invention ressortiront mieux de la description détaillée de modes de réalisation, donnés uniquement à titre d'exemple, qui suit et se réfère aux dessins annexés dans lesquels :
La figure 1 est une vue schématique d'un circuit de liquide conforme à l'invention.
La figure 2 est une vue schématique en coupe verticale d'une boîte à eau conforme à un mode de réalisation de l'invention.
La figure 3 est une vue partielle en coupe verticale d'un autre mode de réalisation de boîte à eau conforme à l'invention.
La figure 4 est une vue similaire à la figure 3, qui représente encore un autre mode de réalisation de l'invention.
La figure 5 est une vue partielle en coupe suivant la ligne V-V de la figure 4.

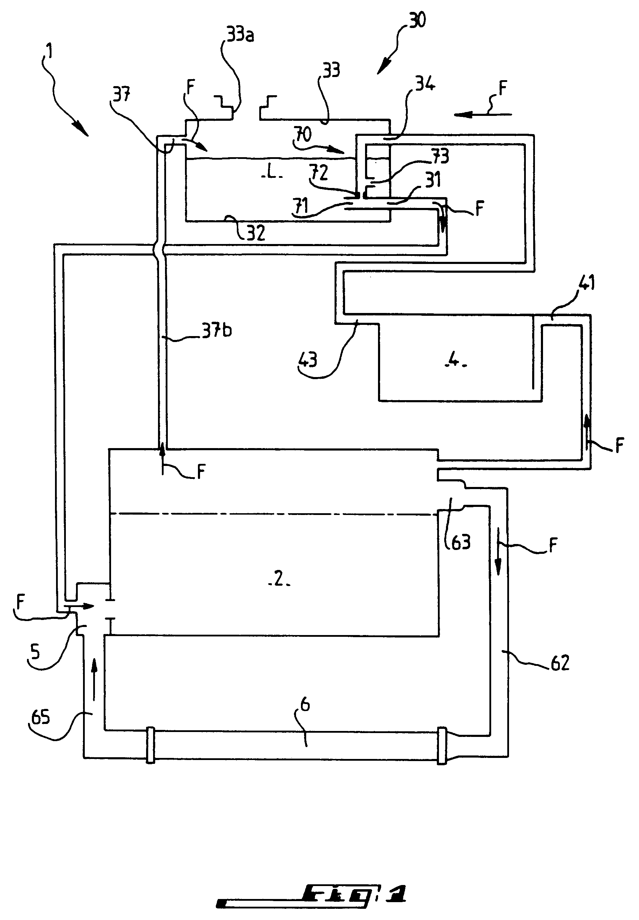

En se reportant à la figure 1, on voit un circuit 1 qui contient un liquide L tel que par exemple de l'eau. Le circuit de liquide 1 traverse d'une part certaines parties d'un moteur à combustion interne 2 de véhicule automobile pour les refroidir, et d'autre part un échangeur de chaleur ou aérotherme 4, faisant partie du système de climatisation de l'habitacle de ce véhicule.

Le circuit de liquide 1 comporte une première portion "chaude", en amont de l'échangeur 4 suivant le sens F de circulation du liquide L dans le circuit 1, et une seconde portion "froide" en aval de l'échangeur.

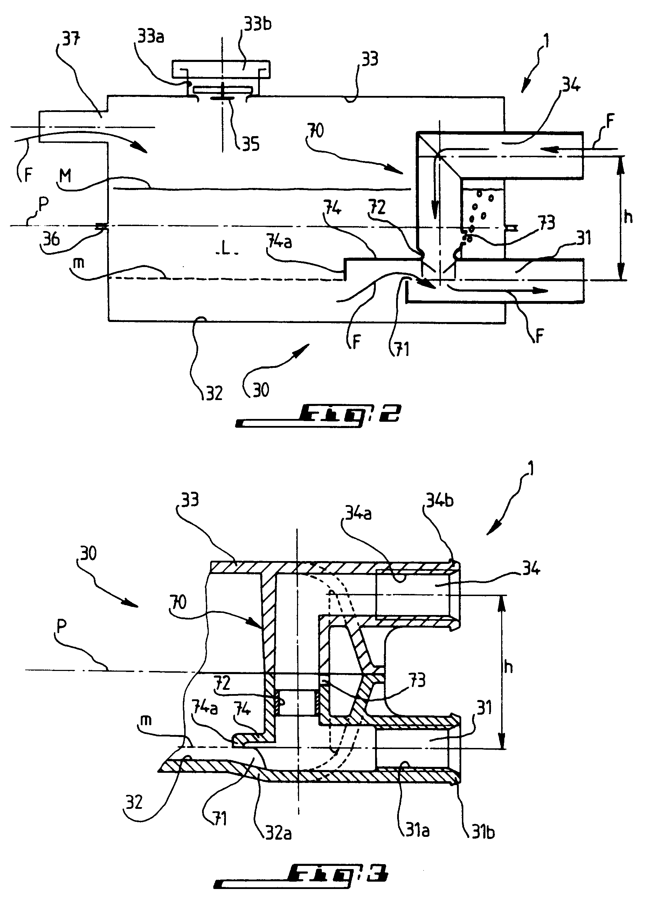

La première portion du circuit 1 comprend une pompe 5 apte à mettre en circulation le liquide L suivant le sens des flèches F, ainsi que les parties à refroidir du moteur 2. Par l'intermédiaire de la pompe 5 et du moteur 2, cette première portion raccorde la sortie d'un réservoir ou boîte de remplissage 30, avec l'entrée 41 de l'échangeur 4. Près du fond 32 de la boîte "à eau" 30, est formé un orifice de sortie 31 dit "inférieur". On comprend que la boîte 30 sert à remplir le circuit 1 avec le liquide L, et comporte à cet effet un goulot 33a qui débouche en haut de cette boîte, c'est-à-dire dans une paroi de sommet 33. Le goulot 33a peut être obturé hermétiquement à l'aide d'un bouchon 33b (figure 2), de préférence équipé d'une soupape tarée 35 apte à limiter la pression à l'intérieur du circuit 1.

Comme illustré, la seconde portion du circuit 1 relie la sortie 43 de l'échangeur 4 à un orifice 34 d'entrée dans la boîte de remplissage 30 et dit second orifice.

Le circuit 1 visible sur la figure 1 comporte également une boucle avec un radiateur de refroidissement 6. Cette boucle de refroidissement comprend d'une part une conduite d'admission 62 par laquelle une partie du liquide L provenant des parties à refroidir du moteur 2 est amenée suivant F au radiateur 6 et d'autre part une conduite de retour 65 reliant la sortie du radiateur 6 à l'une des entrées de la pompe à liquide 5.

Conformément à l'invention, le second orifice 34 est situé à proximité du sommet ou haut 33 de la boîte de remplissage 30, et est raccordé au premier orifice 31 par un canal interne 70, qui s'étend à l'intérieur de la boîte 30. De plus, un passage restreint 72 est prévu dans la partie basse du canal interne 70, entre une ouverture inférieure 71 qui débouche du canal dans le bas de la boîte 30, et un trou 73 pour le dégazage du liquide L provenant du second orifice 34.

Suivant les modes de réalisation illustrés sur les figures 2 à 5, la boîte à eau 30 est obtenue par assemblage de deux pièces suivant un plan de joint P sensiblement horizontal et traversé par le canal interne 70. Ici, l'une de ces deux pièces qui comprend la paroi de sommet 33 ainsi que le second orifice 34, constitue le haut de la boîte de remplissage 30. L'autre pièce forme le fond ou bas de cette boîte, et comprend l'orifice de sortie 31. Néanmoins, le canal 70 peut être constitué par une pièce rapportée dans la boîte 30. Comme on le voit sur la figure 2, un joint d'étanchéité 36 peut être prévu entre le haut et le bas de la boîte 30.

En se reportant maintenant aux figures 1 et 2, on remarque que la boîte de remplissage 30 comporte un orifice d'admission 37 qui est directement raccordé au moteur 2 par une conduite 37b (figure 1) afin de permettre un dégazage permanent des parties à refroidir telles que culasse du moteur 2. Comme illustré, l'orifice 37 débouche dans le haut de la boîte 30, entre la paroi 33 et un niveau maximum M de liquide dans cette boîte. Le niveau M est à une hauteur intermédiaire entre d'une part le plan P et d'autre part les entrées 34, 37 de la boîte 30, qui ont ici la forme d'orifices ou de lumières.

On voit sur les figures que le canal interne 70 a généralement la forme d'un U couché, avec les extrémités libres de ses branches parallèles, respectivement constituées par les orifices 34 et 31, qui s'étendent en saillie à l'extérieur de la boîte 30.

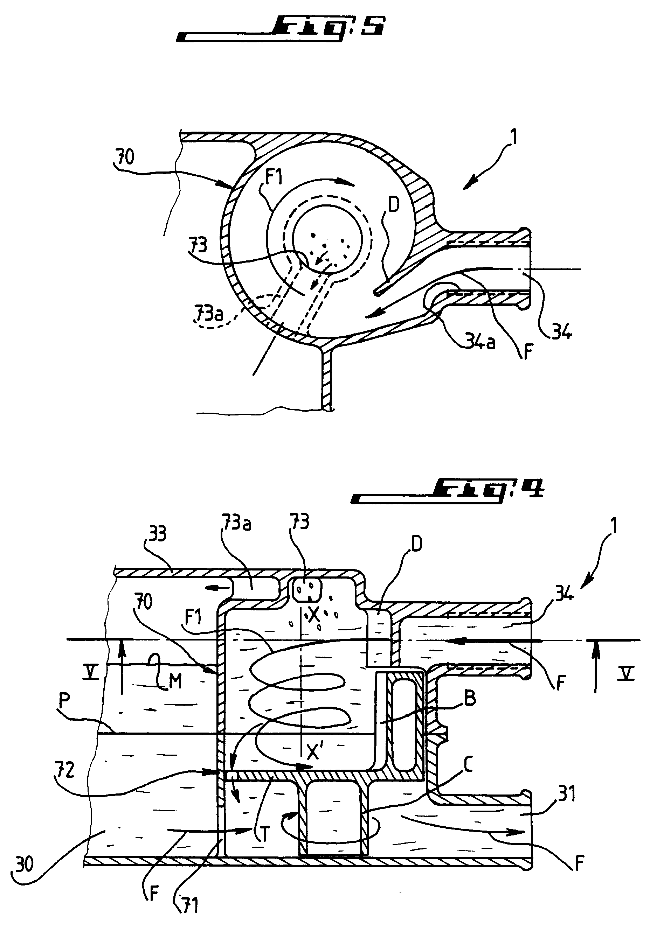

Sur la figure 2, le passage restreint 72 est constitué par un étranglement venu de matière avec le canal interne 70, tandis que sur la figure 3, ce passage est défini par un calibre 72. Le calibre 72 a une forme tubulaire et est inséré dans la partie basse du canal 70, avant assemblage des deux pièces qui constituent la boîte à eau 30. Ici, le trou de dégazage 73 est formé le plus bas possible en dessous du plan P, c'est-à-dire entre le passage restreint 72 et le niveau M de liquide dans la boîte 30.

Par ailleurs, on comprend au vu des figures 2 et 3 que "m" désigne le niveau minimal admissible de liquide L à l'intérieur de la boîte 30 (et donc du circuit 1). L'orifice inférieur 31 ainsi que l'ouverture 71 sont sensiblement au niveau de "m", de sorte que le liquide L peut pénétrer dans la partie basse du canal interne 70, comme illustré par la flèche F sur la figure 2.

La référence numérique 74 désigne sur les figures 2 et 3, une chicane par l'intermédiaire de laquelle l'ouverture inférieure 71 du canal interne 70 débouche à l'intérieur de la boîte à eau 30. Cette chicane 74 à la forme d'une casquette qui s'étend en saillie de l'extérieur du canal 70, à peu près à l'horizontale. Suivant les exemples illustrés, la casquette 74 est venue de matière avec le canal 70 et comporte un rebord 74a tourné vers le bas, dont l'extrémtié inférieure détermine le niveau minimal "m" de liquide. Afin d'obtenir un remplissage correct du moteur 2, la casquette 74 et l'ouverture 71 du canal interne sont réalisées avec une section plus importante en largeur qu'en hauteur. Ainsi, un débit d'eau important peut être maintenu, lors du remplissage du circuit, à l'intérieur du canal 70.

Sur les figures 3 à 5, les pièces formant la boîte 30 sont des pièces de moulage. Le canal interne 70 est constitué par deux tronçons jointifs et respectivement intégrés par moulage à l'une de ces pièces. Les tronçons haut et bas du canal 70 viennent en regard l'un de l'autre pour traverser le plan P, et ont chacun une forme coudée à angle droit, à peu près symétrique par rapport à ce plan. L'orifice d'entrée 34 est formé à fleur de la paroi de sommet 33 et comporte un filetage interne 34a, éventuellement formé dans un insert tubulaire, et une colerette 34b pour la fixation d'une conduite externe reliée à l'échangeur 4. De même, l'orifice inférieur 31 débouche à fleur du fond 32 de la boîte 30, et comporte un filetage 31a et une colerette 31b pour la fixation d'une conduite externe raccordée à la pompe 5.

Suivant le mode de réalisation de la figure 3, le trou de dégazage 73 est formé dans le tronçon de canal venu de moulage avec la pièce inférieure de la boîte, au-dessus du calibre 72.

En se reportant aux figures 4 et 5, un autre mode de réalisation de l'invention va maintenant être décrit. Ici, le canal 70 comporte une partie à peu près cylindrique, et dont l'axe x-x' représenté sur la figure 4 est sensiblement vertical, c'est-à-dire perpendiculaire au plan P. L'orifice d'entrée 34 et l'orifice de sortie 31 sont reliés à cette partie cylindrique du canal 70. Comme dans le mode de réalisation de la figure 3, le canal 70 présente approximativement une forme de "U" couché, et est constitué par deux parties jointives au niveau du plan P. Ces parties sont respectivement venues de matière avec la cloison 33 et l'orifice 34, ainsi qu'avec la cloison 32 et l'orifice 31 de la boîte 30.

En regard de l'orifice d'entrée 34, et donc à proximité de la paroi de sommet 33, la partie cylindrique du canal 70 comporte un déflecteur D. Le déflecteur D est une paroi arquée sensiblement verticale, en saillie dans la partie cylindrique du canal 70, de façon à faire tourbillonner (F₁) le liquide provenant de l'orifice 34 autour de l'axe vertical de cette partie, comme ceci ressort bien des figures 4 et 5.

Par ailleurs, au niveau de la paroi de sommet 33, la partie cylindrique du canal 70 comporte un évidement lui aussi de forme cylindrique. Le trou de dégazage 73 est réalisé dans la paroi verticale cylindrique de cet évidement, et débouche dans la boîte 30 proprement dite, par l'intermédiaire d'un conduit radial 73a. Ce conduit 73a s'étend à peu près parallèlement au plan P et suivant un rayon de la partie cylindrique du canal 70, comme illustré sur la figure 5.

On voit sur la figure 4 à l'intérieur de la partie cylindrique du canal 70, entre le trou 73 et l'ouverture 71, une cloison transversale T qui sépare le canal 70 sensiblement en deux. Ici, la cloison T s'étend à peu près parallèlement au plan P et fait partie d'une pièce rapportée. Toutefois, la cloison T peut évidemment être venue de matière avec l'orifice 31 et la cloison 32 de la boîte 30, par exemple. Cependant, il est impératif de ménager à travers la cloison T au moins une ouverture pour le passage du liquide à travers le canal 70. Suivant le mode de réalisation illustré, l'ouverture en question est constituée par une ou plusieurs longues encoches réalisées à la périphérie de la cloison T, et donc à proximité de la partie cylindrique du canal 70. De fait, ce sont ces encoches qui font office de passage restreint 72 pour le liquide provenant de l'orifice 34, suivant ce mode de réalisation.

On notera également que la cloison transversale T est solidaire d'au moins un bossage et d'au moins une nervure aptes à faciliter l'écoulement du liquide dans le canal 70. Plus précisément, la pièce rapportée dont fait partie la cloison T, possède une nervure désignée en C, et un bossage B. La nervure C a ici une forme à peu près cylindrique et fait saillie de la cloison T, de façon à constituer un pied en appui contre la paroi de fond 32 de la boîte 30. On comprend au vu de la figure 4 que la nervure C permet au liquide provenant de l'ouverture 71, en particulier lors du remplissage du circuit, de tourbillonner autour de cette nervure, ce qui facilite son écoulement vers l'orifice 31.

Le bossage B s'étend depuis la face de la cloison T opposée à la nervure C, sensiblement à la verticale, et canalise le liquide provenant de l'orifice 34 dans la partie cylindrique du canal 70. On remarque que ce bossage B s'intègre à la partie cylindrique du canal 70 et constitue, au niveau de son extrémité libre opposée à la cloison T, une partie de l'orifice d'entrée 34, au droit du déflecteur D.

On a obtenu conformément à l'invention un circuit de liquide 1 qui pallie les inconvénients cités précédemment. Entre autres, il est possible de supprimer la vis de purge manuelle prévue à la sortie de l'aérotherme dans les circuits usuels. En outre, grâce à la hauteur "h" (figure 3) entre les orifices d'entrée 34 et de sortie 31 de la boîte 30, le retour du liquide provenant de l'échangeur 4 "plonge" dans le liquide L contenu dans la boîte 30. Ceci évite à l'arrêt du moteur, tout retour d'air vers l'échangeur 4 par l'intermédiaire de la seconde portion du circuit, et garantit l'écoulement de liquide sur le sens de F, en assurant notamment un remplissage rapide de l'échangeur 4, seulement par la première portion du circuit. De fait, grâce à la turbulence créée par l'étranglement ou passage restreint 72 et par le déflecteur à l'entrée de la partie cylindrique 70, les gaz contenus dans ce liquide L sont évacués du circuit par le trou 73, comme ceci ressort bien des figures 2 et 4.

Evidemment, l'invention n'est nullement limitée aux modes de réalisation qui viennent d'être décrits. Ainsi, une soupape thermostatique peut être prévue en 63 (figure 1) pour interrompre le flux du liquide F vers le radiateur 6 lors de la montée en température du moteur 2.

## Revendications

1. Circuit de liquide pour un échangeur de chaleur (4) associé à un moteur à combustion interne (2) de véhicule automobile, du type comportant une première portion de circuit qui relie un orifice inférieur (31) d'une boîte de remplissage (30) du circuit à l'entrée de l'échangeur par l'intermédiaire d'une pompe (5) ainsi que de parties à refroidir du moteur (2), une seconde portion du circuit (1) reliant la sortie de l'échangeur à un second orifice (34) formé dans la boîte de remplissage (30), caractérisé en ce que le second orifice (34) est situé à proximité du haut (33) de la boîte de remplissage et est raccordé au premier orifice (31) par un canal (70) dit interne qui s'étend à l'intérieur de ladite boîte, un passage restreint (72) étant prévu dans ladite partie basse du canal, entre une ouverture inférieure (71) qui débouche du canal dans le bas de la boîte et un trou (73) de dégazage du liquide (L) provenant du second orifice (34).

2. Circuit selon la revendication 1, caractérisé en ce que le passage restreint (72) est constitué par un calibreur inséré dans le canal interne (70).

3. Circuit selon la revendication 1, caractérisé en ce que le passage restreint est constitué par un étranglement (72) venu de matière avec ledit canal interne (70).

4. Circuit selon l'une des revendications 1 à 3, caractérisé en ce que ledit canal interne (70) comprend une partie à peu près cylindrique et d'axe sensiblement vertical, la partie cylindrique présentant un déflecteur (D) en regard de l'orifice d'entrée (34) du liquide dans le canal, et propre à faire tourbillonner le liquide pénétrant à l'intérieur de cette partie cylindrique, autour dudit axe vertical.

5. Circuit selon la revendication 4, caractérisé en ce que le trou de dégazage (73) précité est formé à proximité de l'axe vertical de la partie cylindrique du canal (70), ainsi que de la paroi de sommet (33).

6. Circuit selon l'une des revendications 1 à 5, caractérisé en ce qu'une cloison transversale (T) de séparation, prévue dans le canal (70), comporte à proximité de sa périphérie, au moins une ouverture qui constitue le passage restreint (72) précité.

7. Circuit selon la revendication 6, caractérisé en ce que la cloison transversale (T) précitée est solidaire d'au moins un bossage (B) et/ou nervure (C), s'étendant à l'intérieur du canal (70) et aptes à faciliter la circulation de liquide dans celui-ci.

8. Circuit selon l'une des revendications 1 à 7, caractérisé en ce que le canal interne (70) est venu de moulage avec la boîte de remplissage (30).

9. Circuit selon l'une des revendications 1 à 8, caractérisé en ce que la boîte de remplissage (30) est constituée par deux pièces moulées et assemblées suivant un plan de joint (P) sensiblement horizontal et traversé par le canal interne (70) précité.

10. Circuit selon l'une des revendications 1 à 9, caractérisé en ce qu'une chicane (74) en forme de casquette s'étend en saillie du canal interne (70), au droit de l'ouverture inférieure (71) en présentant un bord inférieur (74a) proche du fond (32) de la boîte.

## Claims

1. Liquid circuit for a heat exchanger (4) associated with an internal combustion engine (2) of an automotive vehicle, of the type comprising a first circuit portion which connects a lower opening (31) of a box (30) for filling the circuit to the inlet of the exchanger through the medium of a pump (5) as well as of portions to be cooled of the engine (2), a second circuit portion (1) connecting the outlet of the exchanger to a second opening (34) formed in the filling box (30), characterized in that the second opening (34) is located near the top (33) of the filling box and is connected to the first opening (31) by a so-called internal duct (70) which extends inside of the said box, a restricted passage-way (72) being provided in the said low portion of the duct between a lower opening (71) which opens from the duct into the lower part of the box and a hole (73) for degassing the liquid (L) coming from the second opening (34).

2. Circuit according to claim 1, characterized in that the restricted passage-way (72) is constituted by a tube-gauge inserted into the internal duct (70).

3. Circuit according to claim 1, characterized in that the restricted passage-way is constituted by a narrowing (72) integral with the material of the said internal duct (70).

4. Circuit according to claims 1 to 3, characterized in that the said internal duct (70) comprises a nearly cylindrical portion with a substantially vertical axis, the cylindrical portion exhibiting a deflector (D) in front of the opening (34) for the ingress of the liquid into the duct and adapted to cause the liquid penetrating inside of this cylindrical portion to whirl round the said vertical axis.

5. Circuit according to claim 4, characterized in that the aforesaid degassing hole (73) is formed near the vertical axis of the cylindrical portion of the duct (70) and of the top wall (33).

6. Circuit according to one of claims 1 to 5, characterized in that a transverse partition wall (T), provided in the duct (70) comprises near its periphery at least one opening which constitutes the aforesaid restricted passage-way (72).

7. Circuit according to claim 6, characterized in that the aforesaid transverse partition wall (T) is rigidly connected with at least one boss (B) and/or rib (C) extending inside of the duct (70) and adapted to facilitate the circulation of liquid therein.

8. Circuit according to one of claims 1 to 7, characterized in that the internal duct (70) is made integral through molding with the filling box (30).

9. Circuit according to one of claims 1 to 8, characterized in that the filling box (30) is constituted by two molded parts assembled along a substantially horizontal joint plane (P) through which extends the aforesaid internal duct (70).

10. Circuit according to one of claims 1 to 9, characterized in that a cap-shaped baffle (74) extends in projecting relationship from the internal duct (70) at the lower opening (71) while exhibiting a lower edge (74a) near the bottom (32) of the box.

## Patentansprüche

1. Flüssigkeitskreislauf für einen einer Brennkraftmaschine (2) eines Kraftfahrzeuges zugeordneten Wärmetauscher (4), derjenigen Gattung mit einem ersten Kreislaufabschnitt, der eine untere Öffnung (31) eines Gehäuses (30) zum Füllen des Kreislaufes mit dem Eingang des Tauschers über eine Pumpe (5) sowie über abzukühlende Teile des Motors (2) verbindet, einem zweiten den Ausgang des Tauschers mit einer zweiten in dem Füllungsgehäuse (30) gebildeten Öffnung (34) verbindenden Kreislaufabschnitt (1), dadurch gekennzeichnet, dass die zweite Öffnung (34) in der Nähe des oberen Teiles (33) des Füllungsgehäuses gelegen ist und an die erste Öffnung (31)) durch einen sogenannten inneren Kanal (70) der sich innerhalb des besagten Gehäuses erstreckt, angeschlossen ist, wobei ein eingeschnürter Durchlass (72) in dem besagten unteren Teil des Kanals zwischen einer unteren Öffnung (71), die in den Kanal in dem unteren Teil des Gehäuses einmündet und einem Loch (73) zur Entgazung der aus der zweiten Öffnung (34) kommenden Flüssigkeit (L) vorgesehen ist.

2. Kreislauf nach Anspruch 1, dadurch gekennzeichnet, dass der eingeschnürte Durchlass (72) durch einen in den inneren Kanal (70) eingesetzten Kalibrierer gebildet wird.

3. Kreislauf nach Anspruch 1, dadurch gekennzeichnet, dass der eingeschnürte Durchlass durch eine einstückig mit dem Werkstoff des besagten inneren Kanals (70) gebildete Drosselung (72) gebildet wird.

4. Kreislauf nach einem der Ansprüche 1 bis 3, dadurch gekennzeichnet, dass der besagte innere Kanal (70) einen etwa zylindrischen Abschnitt mit etwa senkrechter Achse aufweist, wobei der zylindrische Abschnitt einen Ablenker (D) gegenüber der Öffnung (34) zum Eintritt der Flüssigkeit in den Kanal aufweist und geeignet ist, das Wirbeln der in das Innere dieses zylindrische Abschnittes eindringenden Flüssigkeit um die besagte senkrechte Achse herum zu veranlassen.

5. Kreislauf nach Anspruch 4, dadurch gekennzeichnet, dass das vorgenannte Entgazungsloch (73) in der Nähe der senkrechten Achse des zylindrischen Abschnittes des Kanals (70) sowie der oberen Wand (33) gebildet ist.

6. Kreislauf nach einem der Ansprüche 1 bis 5, dadurch gekennzeichnet, dass eine in dem Kanal (70) vorgesehene Quertrennwand (T) in der Nähe ihres Umfanges wenigstens eine Öffnung, die den vorgenannten eingeschnürten Durchlass (72) bildet, aufweist.

7. Kreislauf nach Anspruch 6, dadurch gekennzeichnet, dass die vorgenannte Querwand (T) mit wenigstens einem Buckel (B) und/oder einer Rippe (C), der bzw. die sich innerhalb des Kanals (70) erstreckt und geeignet sind, den Flüssigkeitsumlauf in demselben zu erleichtern, fest verbunden ist.

8. Kreislauf nach einem der Ansprüche 1 bis 7, dadurch gekennzeichnet, dass der innere Kanal (70) einstückig durch Formguss mit dem Füllungsgehäuse (30) gebildet wird.

9. Kreislauf nach einem der Ansprüche 1 bis 8, dadurch gekennzeichnet, dass das Füllungsgehäuse (30) durch zwei Formgussteile gebildet wird, die entlang einer durch den vorgenannten inneren Kanal (70) durchsetzten etwa waagerechten Teilungsebene (P) zusammengefügt sind.

10. Kreislauf nach einem der Ansprüche 1 bis 9, dadurch gekennzeichnet, dass eine kappenförmige Ablenkplatte (74) aus dem inneren Kanal (70) im Bereich der unteren Öffnung (71) hervorragt und einen in der Nähe des Bodens (32) des Gehäuses liegenden unteren Rand (74a) aufweist.
